# EUROPÄISCHE PATENTSCHRIFT

(11) **EP 3 018 330 B1**
(45) Veröffentlichungstag und Bekanntmachung des Hinweises auf die Patenterteilung: **31.10.2018**
(21) Anmeldenummer: 15188088.7
(22) Anmeldetag: 02.10.2015
(51) Int. Cl.: F02M 25/022, F02M 25/028, F02B 47/02

(54) **BRENNKRAFTMASCHINE**
INTERNAL COMBUSTION ENGINE
MOTEUR À COMBUSTION INTERNE

(30) Priorität: 04.11.2014 DE 102014222466
(43) Veröffentlichungstag der Anmeldung: 11.05.2016
(73) Patentinhaber: Bayerische Motoren Werke Aktiengesellschaft, 80809 München (DE)
(72) Erfinder: Rubbert, Dr. Stephan, 85757 Karlsfeld (DE)

(56) Entgegenhaltungen:
- WO-A2-2006/052719
- DE-A1- 4 239 842
- DE-U1- 7 832 077
- GB-A- 2 146 387
- GB-A- 2 497 770
- US-A1- 2003 168 025
- US-A1- 2006 266 307
- US-B1- 6 637 382

## Beschreibung

Die Erfindung betrifft eine Brennkraftmaschine mit mindestens einem Zylinder, wobei der Zylinder über ein Schwingrohr mit einem Luftsammler verbunden ist, und mit einem Wasserinjektor. Ähnliche Brennkraftmaschinen sind aus der WO 2006/052719 A2 und der US 6 637 382 B1 bekannt.

Eine derartige Brennkraftmaschine ist bekannt. Das in den Brennraum eingespritzte Wasser vermindert die Klopfneigung des Motors und vermeidet eine Gemischanreicherung zur Begrenzung der Abgastemperatur. Das Wasser kann durch unterschiedliche Systeme in den Zylinder eingebracht werden, unter anderem dadurch, dass das Wasser in das Saugrohr eingespritzt wird.

Bei einer derartigen Saugrohreinspritzung wird das Wasser über einen Injektor eingespritzt, der in der Nähe der Einlassventile angeordnet ist.

Dies führt jedoch dazu, dass häufig die Wände des Einlasskanals und die Ventilteller benetzt werden. Demzufolge gelangt nur ein geringer Teil des Wassers direkt in den Brennraum. Darüber hinaus wird die Menge des Wassers durch einen Wandfilm zyklusabhängig schwer kontrollierbar.

Es ist daher Aufgabe der vorliegenden Erfindung, hier Abhilfe zu schaffen.

Diese Aufgabe wird durch die Merkmalskombination des unabhängigen Anspruches 1 gelöst.

Infolge dieser Ausgestaltung können die Wassertropfen besser der Luftströmung folgen, und die Bildung eines Wandfilms kann vermindert werden.

Erfindungsgemäß ist der Wasserinjektor gegenüber dem Schwingrohr angeordnet.

Erfindungsgemäß ist der Wasserinjektor so zu dem Schwingrohr ausgerichtet, dass er im Wesentlichen axial in das Schwingrohr einspritzt.

Vorteilhafterweise ist der Wasserinjektor als Drallinjektor ausgebildet.

Mit einer Positionierung des Wasserinjektors im Luftsammler gegenüber dem Schwingrohr lässt sich der Wasserverbrauch reduzieren, da ein größerer Wasseranteil flüssig in den Brennraum gelangt und nicht als Wandfilm den Einlasskanal und das Einlassventil kühlt. Die zyklischen Schwankungen durch Wandfilmeffekte lassen sich ebenfalls vermindern.

Weitere Einzelheiten, Merkmale und Vorteile der Erfindung ergeben sich aus der nachfolgenden Beschreibung anhand der Zeichnungen. Es zeigen:
- Figur 1: den schematischen Aufbau einer Brennkraftmaschine mit einer Wassereinspritzung,
- Figur 2: eine Detailansicht im Bereich des Schwingrohres mit der erfindungsgemäßen Anordnung des Wasserinjektors, und
- Figur 3: einen Vergleich zwischen einer herkömmlichen und der erfindungsgemäßen Anordnung des Wasserinjektors.

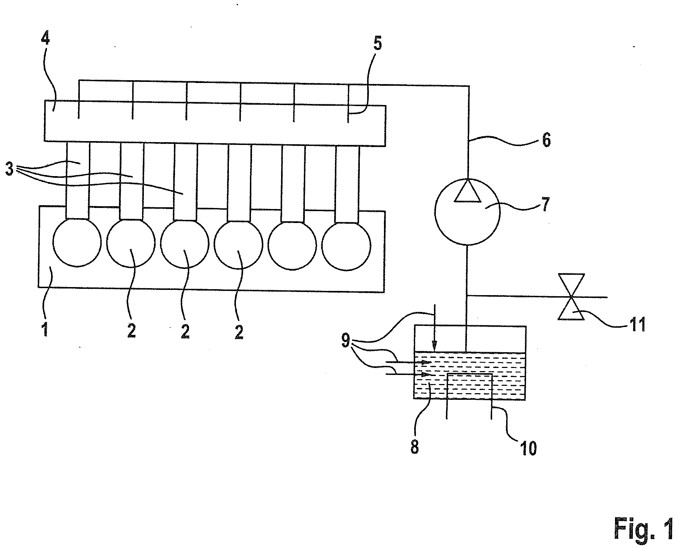

In Figur 1 ist der schematische Aufbau einer Brennkraftmaschine 1 mit einer Wassereinspritzung dargestellt.

Die Brennkraftmaschine 1 hat mehrere Zylindern 2, die jeweils über ein Schwingrohr 3 mit einem Luftsammler 4 verbunden sind. In dem Luftsammler 4 ist für jeden Zylinder 2 bzw. jedes Schwingrohr 3 ein Wasserinjektor 5 angeordnet. Die Wasserinjektoren 5sind über eine Leitung 6 mit einer Wasserpumpe 7 verbunden, die wiederum mit einem Wassertank 8 in Verbindung steht.

In dem Wassertank 8 sind verschiedene Sensoren 9 angeordnet, welche z. B. den Füllstand, die Temperatur, die Leitfähigkeit des Wassers usw. überwachen. Außerdem ist in dem Wassertank eine Heizung 10 vorhanden. Zwischen der Wasserpumpe 7 und dem Wassertank 8 kann ein Bypassventil 11 vorgesehen sein.

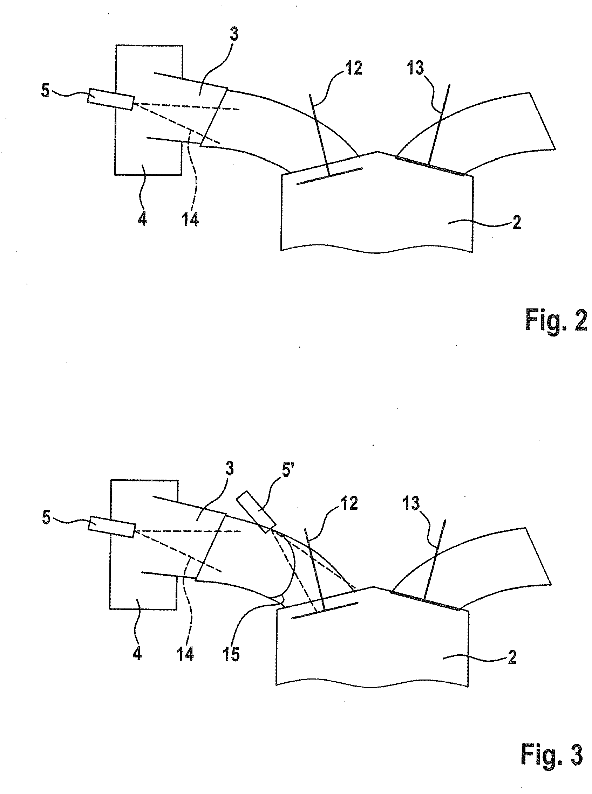

In Figur 2 ist ein Detail der Brennkraftmaschine 1 dargestellt. Man erkennt einen Zylinder 2 mit einem Einlassventil 12 und einem Auslassventil 13.

Das Einlassventil 12 ist über das Schwingrohr 3 mit dem Luftsammler 4 verbunden. In dem Luftsammler 4 ist der Wasserinjektor 5 derart angeordnet, dass er dem Schwingrohr 3 gegenüber liegt und das Wasser 14 im Wesentlichen axial in das Schwingrohr 3 einspritzt.

Figur 3 zeigt einen Vergleich der Position des Wasserinjektors 5 bei der erfindungsgemäßen Anordnung (links) und des Wasserinjektors 5' bei der herkömmlichen Standard-Saugrohreinspritzung (rechts).

Bei der herkömmlichen Positionierung ist der Wasserinjektor 5' stromaufwärts einer Kanalverzweigung 15, an welcher sich Schwingrohr 3 und Saugrohr verzweigen, angeordnet. Diese Positionierung führt auch bei einem Zweistrahlinjektor zu einem Wandkontakt des Wassers mit den inneren Kanalwänden und damit zu einem Wandfilmaufbau. Ferner ist der Spraywinkel begrenzt.

Im Gegensatz dazu ermöglicht die erfindungsgemäße Positionierung des Wasserinjektors 5 in dem Luftsammler 4 gegenüber dem Schwingrohr 3 eine Flacheinspritzung, die zu einer Spraygeometrie mit einem großem Öffnungswinkel führt, da der Kanalquerschnitt in diesem Bereich deutlich größer ist als bei der herkömmlichen Positionierung des Wasserinjektors 5' im Saugrohr. Erfindungsgemäß kann darüber hinaus auch ein Drallinjektor mit einem Hohlkegelspray und einem besserem Tropfenspektrum eingesetzt werden. Aufgrund der größeren Entfernung zur Kanalverzweigung 15 ist der Tropfenzerfall beim Passieren der Kanalverzweigung 15 fortgeschritten, und der Wandkontakt ist geringer ausgeprägt. Damit gelangt ein größerer Anteil des eingespritzten Wassers 14 direkt in den Brennraum und kühlt das Gemisch wirksamer als bei der herkömmlichen Positionierung, die durch vermehrten Wandkontakt und Auftreffen einzelner Tropfen auf dem Einlassventil 12 bevorzugt diese Bauteile kühlt.

Die vorhergehende Beschreibung der vorliegenden Erfindung dient nur zu illustrativen Zwecken und nicht zum Zwecke der Beschränkung der Erfindung.

### Bezugszeichenliste:

- 1: Brennkraftmaschine
- 2: Zylinder
- 3: Schwingrohr
- 4: Luftsammler
- 5: Wasserinjektor
- 5': Wasserinjektor
- 6: Leitung
- 7: Wasserpumpe
- 8: Wassertank
- 9: Sensor
- 10: Heizung
- 11: Bypassventil
- 12: Einlassventil
- 13: Auslassventil
- 14: Wasser
- 15: Kanalverzweigung

## Patentansprüche

1. Brennkraftmaschine mit mindestens einem Zylinder, wobei jeder Zylinder über ein Schwingrohr mit einem Luftsammler verbunden ist, **dadurch gekennzeichnet, dass** jedem Schwingrohr (3) ein in dem Luftsammler (4) angeordneter Wasserinjektor (5) gegenüber angeordnet und so zu dem Schwingrohr (3) ausgerichtet ist, dass er im Wesentlichen axial in das Schwingrohr (3) einspritzt.

2. Brennkraftmaschine nach Anspruch 1, **dadurch gekennzeichnet, dass** der Wasserinjektor (4) als Drallinjektor ausgebildet ist.

## Claims

1. An internal combustion engine with at least one cylinder, wherein each cylinder is connected via a resonance tube to a plenum chamber, **characterised in that** a water injector (5) arranged in the plenum chamber (4) is arranged opposite each resonance tube (3) and is oriented relative to the resonance tube (3) such that it injects substantially axially into the resonance tube (3).

2. An internal combustion engine according to Claim 1, **characterised in that** the water injector (4) is designed as a swirl injector.

## Revendications

1. Moteur à combustion interne comprenant au moins un cylindre, chaque cylindre étant relié au moyen d'un tube oscillant à un collecteur d'air,
**caractérisé en ce qu'**
à l'opposé de chaque tube oscillant (3) est monté un injecteur d'eau (5) monté dans le collecteur d'air (4) et orienté par rapport au tube oscillant (3) de façon à injecter de l'eau dans ce tube oscillant (3) essentiellement axialement.

2. Moteur à combustion interne conforme à la revendication 1,
**caractérisé en ce que**
l'injecteur d'eau (4) est réalisé sous la forme d'un injecteur à tourbillonnement.
